# EUROPEAN PATENT APPLICATION

(11) **EP 2 501 136 A1**
(43) Date of publication of application: **19.09.2012**
(21) Application number: 11305299.7
(22) Date of filing: 17.03.2011
(51) Int. Cl.: H04N 13/00

(54) **System and method for displaying stereoscopic images**

(71) Applicant: Thomson Licensing, 92130 Issy-les-Moulineaux (FR)
(72) Inventor: Winter, Marco, 30659, Hannover (DE)
(74) Representative: Schmidt-Uhlig, Thomas

(57) **Abstract**

A system and a method for displaying stereoscopic images are described. The system includes a display device for displaying stereoscopic images and a sound system for generating a virtual sound source (5). The display device is adapted to display two or more pairs of stereoscopic images for different viewers.

## Description

The present invention relates to a system and a method for displaying stereoscopic images, such as projection systems and methods in 3D cinemas or 3D television sets. More specifically, the invention relates to a system and a method for displaying stereoscopic images, which employ a spatial audio rendering system, e.g. a wave field synthesis sound system.

There currently is an increasing demand and, consequently, an increasing market penetration of systems for displaying stereoscopic images. For example, many movie theaters have recently installed digital or film based projection systems for displaying 3D movies. Similarly, the first 3D television sets are available on the market. As a result, more and more video content is produced in 3D.

Apart from the growing demand for systems for displaying stereoscopic images, there also is an increasing demand for further improved audio systems. Spatial audio rendering systems, e.g. systems based on multichannel mixing technologies or on wave field synthesis, allow to create virtual acoustic environments. With these techniques virtual sound sources are generated, which are typically located at the corresponding display positions of the visual objects associated to the virtual sound sources. For example, if a scene displays two persons speaking to another, a first virtual sound source is located at the display position of the first person, whereas a second virtual sound source is located at the display position of the second person. In the case of wave field synthesis, the localization of the virtual sound sources does not depend on or change with the specific position of the spectator.

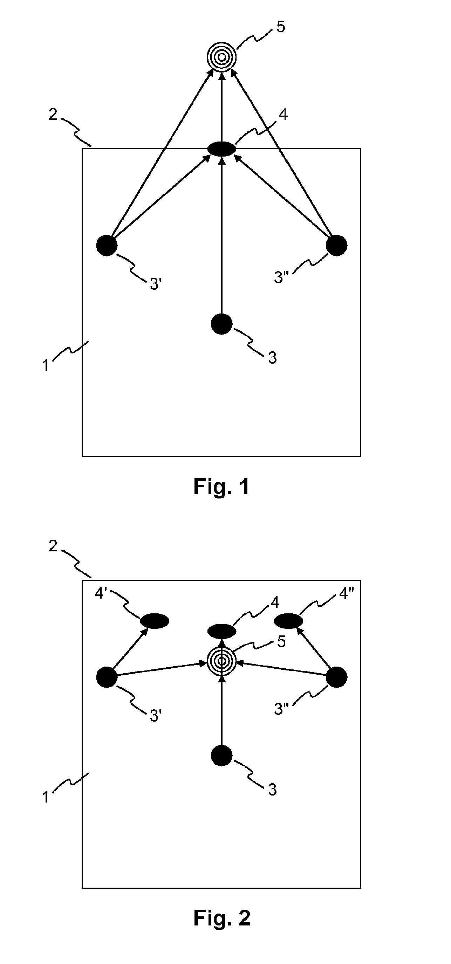

While the independence of the localization of the virtual sound source from the position of the spectator is rather advantageous for classical 2D movies, this is no longer the case for 3D movies. Fig. 1 depicts the situation in case of a 2D movie. As can be seen, for different positions 3, 3', 3" within the auditorium 1 the location of a video object 4 on the screen 2 and the location of the associated virtual sound source 5 are independent of the specific position 3, 3', 3". This is no longer the case for 3D movies, as illustrated in Fig. 2. While the location of the virtual sound source 5 is still independent of the specific position 3, 3', 3", for each position 3, 3', 3" within the auditorium 1 the associated video object 4, 4', 4" appears at a different location. As a result, there is a lack of concordance of video and sound localization, which leads to an inferior user experience.

It is thus an object of the present invention to propose a solution for displaying stereoscopic images, which allows to achieve an improved concordance of video and sound localization.

According to the invention, this object is achieved by a display system for stereoscopic images, with a sound system for generating a virtual sound source and a display device for displaying stereoscopic images, which is adapted to display two or more pairs of stereoscopic images for different viewers.

Accordingly, a method for displaying stereoscopic images has the steps of:
- generating a virtual sound source; and
- displaying two or more pairs of stereoscopic images for different viewers.

A main idea of the invention is to display different pairs of stereoscopic images for viewers in different locations relative to a screen, e.g. for viewers more to the left of the screen and viewers more to the right of the screen. In this way it becomes possible to achieve a better concordance of the location of a sound source and the location of a corresponding visual object.

Advantageously, the display device is a projector, e.g. a projector in a movie theatre, which projects two or more pairs of stereoscopic images for different areas of an auditorium. The solution according to the invention is especially interesting for display systems capable of providing a large depth range and having relatively distanced viewer locations, for which the problem of video and sound localization mismatch is more relevant. However, the solution is likewise applicable to a 3D television set or a consumer 3D projector.

Preferably, the two or more pairs of stereoscopic images are displayed using light with three or more different polarizations. For example, a first image is displayed using horizontally polarized light, a second image is displayed using vertically polarized light, and a third image is displayed using left or right circular polarized light. Depending on the location of a viewer glasses with different combinations of polarization filters are used to provide a desired pair of stereoscopic images to a viewer. This solution has the advantage that glasses with polarization filters are readily available and no glasses with active components are needed. However, the number of available views is limited by the number of polarizations that can be effectively separated.

Alternatively, the two or more pairs of stereoscopic images are displayed by displaying images at three or more times a specified frame rate. Depending on the location of a viewer the necessary images of the desired pair of stereoscopic images are filtered using active shutter glasses. For example, in case of two pairs of stereoscopic images three images are displayed per frame. Therefore, for an effective frame rate of 24 frames per second, i.e. each eye perceives a frame rate of 24 frames per second, three images need to be displayed per 1/24 second. The display device thus needs an actual frame rate of 72 frames per second. This solution has the advantage that the number of views is only limited by the actual frame rate of the display device. Of course, it is likewise possible to combine the solutions using different polarizations and shutter glasses.

As a further alternative, the two or more pairs of stereoscopic images are displayed using three or more anaglyph filtered images. In the case different anaglyph glasses are used, which are designed such that depending on the location of a viewer only the necessary images of the desired pair of stereoscopic images are visible. Also in this case no active glasses are needed.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: schematically depicts the situation of concordance of video and sound localization for a 2D movie; and
- Fig. 2: shows the situation of concordance of video and sound localization for a 3D movie.
Fig. 1 depicts the situation of concordance of video and sound localization in case of a 2D movie. For different positions 3, 3', 3" within the auditorium 1 the location of a video object 4 on the screen 2 and the location of the associated virtual sound source 5 are relatively independent of the specific position 3, 3', 3". When the sound source 5 is located at the position of the video object 4, a perfect concordance of video and sound localization is achieved irrespective of the seat location of the spectator. However, the concordance becomes worse when the distance of the virtual sound object to the screen increases.

The situation is different in case of a 3D movie, as illustrated in Fig. 2. Current 3D projectors display two images to the auditorium. A first image is provided for the left eye, whereas a second image is provided for the right eye. Some projection systems make use of shutter glasses to separate both images, other projection systems make use of polarized images (e.g. horizontal/vertical polarization, left circular/right circular polarization) and glasses with corresponding polarization filters. A further alternative is based on the use of anaglyph glasses. While for stereoscopic images the location of the virtual sound source 5 is still independent of the specific position 3, 3', 3" of the spectator, for each position 3, 3', 3" within the auditorium 1 the associated video object 4, 4', 4" appears at a different location. As a result, there is a lack of concordance of video and sound localization, which leads to an inferior user experience. Usually, only the spectators in the central area of the auditorium, i.e. in the vicinity of the central position 3, have the correct concordance of audio and sound localization. However, there is an increasing mismatch of audio and sound localization towards the left and the right of the auditorium, i.e. closer to the walls of the auditorium.

This localization mismatch is overcome by displaying more than two images to the auditorium, i.e. by making use of a multiview approach. In the easiest case, three images are displayed, which are captured by three cameras arranged horizontally side by side. The images captured by the left camera pair, i.e. the left camera and the central camera, are used for the left part of the auditorium. The images captured by the right camera pair, i.e. the right camera and the central camera, are used for the right part of the auditorium. For this purpose the projector projects all three images for the same movie timestamp to the screen. The spectators use glasses which separate either the projected images of the left camera pair or the projected images of the right camera pair from the set of projected images. Therefore, different glasses are needed depending on whether a seat is located in the left part or the right part of the auditorium.

A plurality of possibilities to realize the required separation of the pairs of images are readily available. For example, glasses with different combinations of polarization filters can be used. When the images of the left camera, the central camera and the right camera are displayed using left circular polarized light, horizontally polarized light and right circular polarized light, respectively, the necessary pairs of images can easily be separated by glasses with the corresponding filter combinations. For the above example the spectators on the left seats need glasses with a left circular polarization filter for the left eye and a horizontal polarization filter for the right eye. Accordingly, the spectators on the right seats need glasses with a horizontal polarization filter for the left eye and a right circular polarization filter for the right eye. Of course, other polarization combinations can likewise be used.

A further solution makes use of shutter glasses and a projector which provides images at three times the desired frame rate. For example, in case of frame rate of 24 frames per second (fps), three images are displayed per 1/24 second, so that each eye perceives an effective frame rate of 24fps. In this case the shutter glasses for the spectators on the left seats are controlled such that the shutter for the left eye lets only pass the left camera image, whereas the shutter for the right eye lets only pass the image of the central camera. Accordingly, the shutter glasses for the spectators on the right seats are controlled such that the shutter for the left eye lets only pass the image of the central camera, whereas the shutter for the right eye lets only pass the right camera image.

Still a further solution uses three anaglyph filtered images. In the case the anaglyph glasses are designed such that for the spectators on the left seats for the left eye only the left camera image is visible, whereas for the right eye only the central camera image is visible. Accordingly, for the spectators on the right seats the anaglyph glasses are designed such that for the left eye only the central camera image is visible, whereas for the right eye only the right camera image is visible.

Of course, the proposed solution is expandable to more than two different views, e.g. to three different views using images captured by four cameras and a corresponding separation of the auditorium into three areas, i.e. left, middle, and right. In this case the projection system based on polarization uses four different polarizations (horizontal, vertical, left circular, right circular). Similarly, the projection system based on shutter glasses provides four different images per movie timestamp. Likewise, the projection system based on anaglyph filters needs to display the four images per movie timestamp in such way that each of the four images can be separated by the anaglyph glasses from the set of images so that a single image per eye is made visible.

The number of views may be even further increased to further improve the concordance of audio and video localization. However, for projection systems based on polarization the number of views is limited by the number of separatable polarizations. This limitation can be overcome by combinations of different polarizations and shutter glasses.

Furthermore, though in the above description the invention is explained in the frame of its application to a 3D movie theatre, the invention is likewise applicable to 3D television systems or consumer 3D projection systems. In addition, the invention is likewise applicable to 2D display systems. These display systems do normally not requires any glasses. However, to make use of the invention for these display systems the viewers would nonetheless need to wear the above described adapted glasses. Of course, in case of autostereoscopic 3D display systems, no glasses are necessary.

## Claims

1. A display system for stereoscopic images, with a display device for displaying stereoscopic images and a sound system for generating a virtual sound source (5), **characterized in that** the display device is adapted to display two or more pairs of stereoscopic images for different viewers.

2. The display system according to claim 1, **wherein** the display device is a projector, which projects two or more pairs of stereoscopic images for different areas of an auditorium.

3. The display system according to claim 1, **wherein** the display device is a 3D television set.

4. The display system according to one of claims 1 to 3,
**wherein** the two or more pairs of stereoscopic images are displayed using light with three or more different polarizations.

5. The display system according to one of claims 1 to 4,
**wherein** the two or more pairs of stereoscopic images are displayed by displaying images at three or more times a specified frame rate.

6. The display system according to one of claims 1 to 3,
**wherein** the two or more pairs of stereoscopic images are displayed using three or more anaglyph filtered images.

7. A method for displaying stereoscopic images, the method **having** the steps of:
- generating a virtual sound source (5); and
- displaying two or more pairs of stereoscopic images for different viewers.

8. The method according to claim 7, **wherein** the two or more pairs of stereoscopic images are displayed using light with three or more different polarizations.

9. The method according to claim 7 or 8, **wherein** the two or more pairs of stereoscopic images are displayed using light with three or more different polarizations.

10. The method according to claim 7, **wherein** the two or more pairs of stereoscopic images are displayed using three or more anaglyph filtered images.
